# EUROPEAN PATENT APPLICATION

(11) **EP 1 919 216 A1**
(43) Date of publication of application: **07.05.2008**
(21) Application number: 06255572.7
(22) Date of filing: 30.10.2006
(51) Int. Cl.: H04N 7/173

(54) **Personalised media presentation**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

Apparatus for dynamically generating a personalised version of a presentation for a user, the presentation comprising a first assembled selection of more than one of a plurality of media components, each of the plurality of media components being associated with metadata specific to it,
the apparatus including
- selection means for selection of at least one of the plurality of media components, wherein the selection is performed in dependence on the metadata associated with the selected media component or components,
- assembly means for assembly of the selection of the at least one of the plurality of media components, where more than one of the plurality of media components is selected, and
- user interface means for activating the selection means and assembly means, wherein in use the user can activate the selection means and assembly means using the user interface means after commencement of the presentation, to dynamically generate the personalised version of the presentation comprising a second assembled selection of at least one of the plurality of media components.

## Description

This invention relates to an apparatus and method for the personalisation and control of a media presentation, and is of particular application in the context of interactive presentations having a linear narrative.

In presentations such as movies, television commercials, slideshow presentations, and so on, content is presented to the viewer or user typically as a linear narrative over time. Traditionally, a viewer or user is typically a passive consumer (in the sense of consuming the visual, aural, and other sensory output) of such presentations (e.g. movies or commercials in a cinema, the television, radio or via a computer), and unable to influence the presentation; all that can be done was to stop viewing it.

Interactive presentations on the other hand, allow a user some measure of control over what and how media content is presented to him. With the development of random access presentation devices such as laserdisc players presenting to the user digital media content, a user was able to access and playback any part of the content in a nonlinear manner, something previously not possible with e.g. magnetic-tape based video players. In an example of an interactive presentation, stories and games could consist of a main storyline, but the media content might include branching plotlines which would allow the user to construct his own customised and personalised version of the narrative.

WO 2004/025508, an earlier filing by the current applicants, describes a system wherein metadata is used to label, or tag, media component files which inter alia describe the content of the file, or what the media component represents. The metadata can also describe the relationship between the tagged media component and another component. Using the metadata, a presentation can be automatically assembled from the tagged media components. The media content and components can be marked up manually by a human editor, or using automated methods. In addition to altering the storyline or plot of the narrative, matter incidental to the story or plot such as tone, atmosphere and the like, could also be changed e.g. to tailor the presentation to different users. For example, the music track could be changed to suit different tastes, as could the pace of the action.

Unlike interactive presentations, this invention seeks to provide to the user a customised presentation which, once created or composed, remains unchanging or static during the presentation itself.

To create such a presentation, various media component files (which are typically digital in nature) are created. These media component files contain the media content components that will be used to create or modify the presentation (e.g. by assembly or re-assembly of media components, or serve to substitute other components within the presentation). After creation of the components, a human can organise, edit or otherwise process the various media component files in a manner to allow for the plurality of media component files to be used to create a presentation tailored for the end user or viewer. In WO 2004/025508, the actual creation of the final personalised presentation is done by a human editor.

According to a first aspect of the invention, there is provided apparatus for dynamically generating a personalised version of a presentation for a user, the presentation comprising a first assembled selection of more than one of a plurality of media components, each of the plurality of media components being associated with metadata specific to it,
the apparatus including
- selection means for selection of at least one of the plurality of media components, wherein the selection is performed in dependence on the metadata associated with the selected media component or components,
- assembly means for assembly of the selection of the at least one of the plurality of media components, where more than one of the plurality of media components is selected, and
- user interface means for activating the selection means and assembly means, wherein in use the user can activate the selection means and assembly means using the user interface means after commencement of the presentation, to dynamically generate the personalised version of the presentation comprising a second assembled selection of at least one of the plurality of media components.

In a story told in a film, radio or television programme, a commercial or the like, the narrative is linear, requiring the user to follow the sequential number of scenes, and the development of the content's ideas and themes. In even an interactive presentation of linear media content, a user who wishes to consume the content will have to follow the chronological sequence of events being presented.

This aspect of the invention allows a user to control or personalise the presentation of a linear narrative presentation, by stating his preferences in the level of detail provided during the presentation.

Currently if the user has missed part of the presentation, he is able to reverse the sequence of the presentation, e.g. by using a "rewind" button e.g. on a VHS "video home system"; alternatively or additionally, by skipping to, or selecting the earlier "chapter" or other point in the narrative desired, if the user is using a digital presentation device such as a DVD "digital video disc" machine. Having located the earlier point in the narrative, the user would usually consume the presentation again in a chronological fashion to be able to properly understand plot and story developments during that period. In both digital (e.g. DVD) and non-digital (e.g. VHS) presentation device formats, the user has the option of viewing the content while the presentation is being reversed or fast-forwarded, but this is an unsatisfactory way of obtaining a high-quality synopsis of the plot for the relevant part of the narrative, because this method fails to pick out the key or main points in the plot or story in a qualitative manner.

In another scenario, a user may find certain parts of the narrative to be not to his liking for any reason - perhaps he finds the level of detail tedious, or the pace of the action too slow. Different users would be interested or disinterested in the same segment of the narrative. A typical response and solution would be to use a "fast-forward" function and/or skip chapters or select the exact point of the narrative to recommence the presentation. Again, it is difficult for the user to obtain a good idea of the substance of the tedious part of the presentation without spending the time and effort consuming that part of the narrative in full.

This aspect of the invention allows the user wishing simply to know the salient points of the plot for a defined period prior or subsequent to a specific point in time - e.g. to catch up with other viewers of the presentation - to do so without consuming the narrative in full.

The invention described below is also directed to the enrichment of the user's experience by making it more "user-centric" in terms of personalising the presentation so that the user can get more of what he wants from the presentation.

According to a second aspect of the invention, there is provided a method for dynamically generating a personalised version of a presentation for a user, the presentation comprising a first assembled selection of more than one of a plurality of media components, each of the plurality of media components being associated with metadata specific to it,
the method including the steps of
- selection of at least one of the plurality of media components, wherein the selection is performed in dependence on the metadata associated with the selected media component or components,
- assembly of the selection of the at least one of the plurality of media components, where more than one of the plurality of media components is selected, and
- activation of the selection means and assembly means after commencement of the presentation, to dynamically generate the personalised version of the presentation comprising a second assembled selection of at least one of the plurality of media components.
Thus in viewing/participating in an interactive presentation, a user is able to dictate both what is presented to him, in terms both of content and matters pertaining atmosphere, tone and the like. The present invention serves to enrich the user's experience of the presentation even further, by giving the user even more control over e.g. the already personalised presentation.

The invention will now be described, by way of example only, with reference to the drawings wherein:
Figure 1 is a block diagram of an embodiment of the invention,
Figure 2 represents the creation of a summary of the presentation, and
Figure 3 represents the creation of a modified version of the presentation having a modified level of content detail.

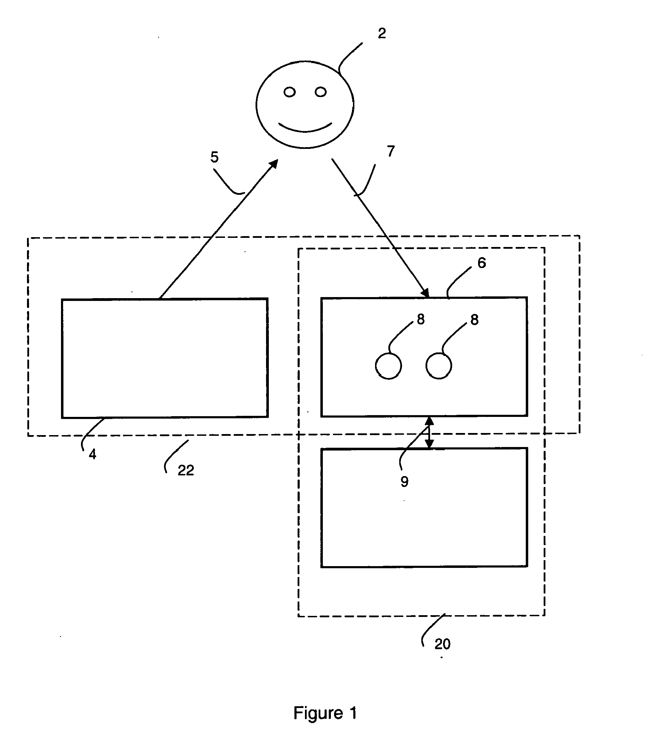

In Figure 1 depicting an embodiment of the invention, a user (2) is an audience or consumer of a presentation which content is presented (5) on a presentation device (4), which can be any type of audio-visual, multimedia or other device or apparatus capable of sensory output and presenting content having a narrative flow. In the embodiment discussed below, the presentation device is a television. The user can control (7) the functioning (e.g. power on/off) of the television using a user interface e.g. a control device (6) to control aspects of the settings of the television programme being watched (e.g. channel, brightness, sound volumes). The control device can be integrally and/or physically linked (22) to the television set, or wirelessly-linked in the form of e.g. a handheld remote control.

According to the invention, there is also provided within the system means (10) for the user to personalise and control what and how the narrative is presented to him. This function is in this embodiment performed by a processor (10), which communicates with the control device (6). The control device can be provided as an integral part (20) of the processor.

The invention is of particular application after the linear narrative of the presentation has commenced, so that the content of an already-personalised programme can be even further customised during the presentation (or during a stop or pause part way into the presentation), according to the user's wishes. In the embodiment shown in Figure 1, one or more personalisation buttons (8) are located for this purpose on the control device (6). The button(s) could of course also be provided as a dedicated personalisation button on a device separate from the controlling device and/or the television set. The personalisation button(s) present the user with one or a number of the following options to (further) personalise media content, and enriches the experience of the consumption of such media content.

### "Summary" function

A first option, activated by e.g. depressing what in this description shall be termed a "summarise" button (8), the user is able to obtain a qualitative summary of the salient points of the narrative plot or storyline of a part, a number of parts, or if desired, the whole of the narrative. This function can allow the user to gain a qualitative recapitulation of part(s) of the narrative up to a certain point in the presentation, for example where the user has progressed to some point within the presentation, but has missed a part, or else wants a quick reminder of what had happened in the presentation at a point earlier along the linear narrative.

Thus in a long-running soap opera, the presentation of which may could take many, many hours, a user can rapidly learn about the personalities of characters, the plot themes, or simply catch up with what had happened the previous episode. In another example, the last 15 minutes of a football match can be condensed into a summary of the highlights only.

In one application of the invention, this option would allow a user to quickly get up to speed with e.g. other viewers of the same television programme, thus allowing the user to watch the programme with the other viewers from the point at which the programme was last stopped or paused.

In an alternative aspect, this function can provide to the user a summary of parts of the presentation at a point in the linear narrative, ahead of where the user has progressed to, in a "get to the point" fashion (which is related to the "Level of Detail" aspect of the invention discussed below). For example, where the user finds that a part of the narrative to be dragging and dull with an excess of detail, this function can be used to give to the user the gist of the scene or the like, without him having to sit through a morass of unwanted detail about e.g. the secret previous life of a soap opera character as a waiter in Barbados.

The skilled person would appreciate that this summary function can also be used to obtain a summary of the entire presentation, i.e. beyond the point where the user (or the other viewers) has stopped or paused the presentation, or indeed where the user has completed, or has yet to start, consuming the presentation.

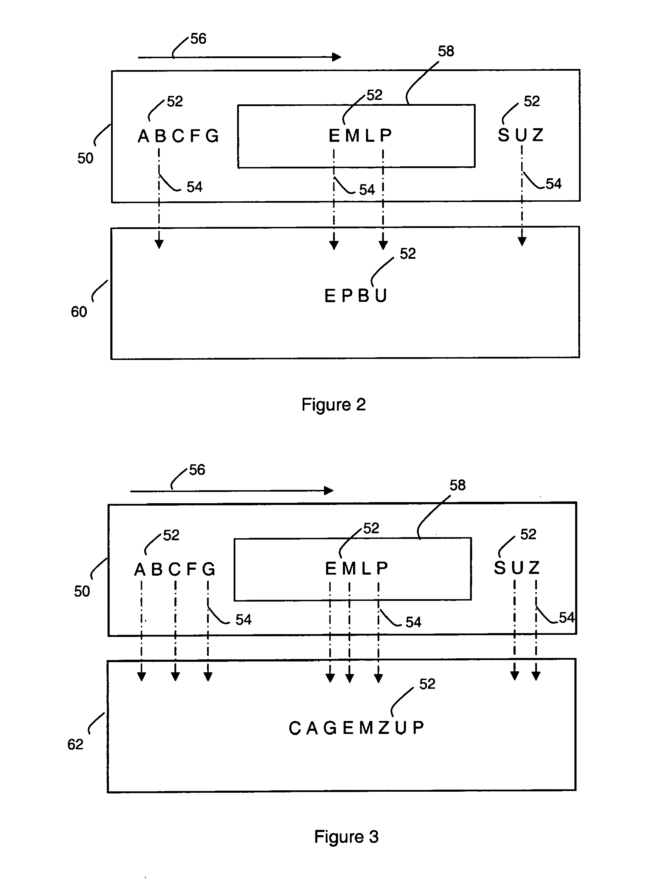

Turning now to Figure 2, the "summary" function works by reference to information and criteria about the media content and components, in particular the chronological or other location in the media and narrative flow, the profile of the user, as well as of the media content itself.

A presentation, or part of a presentation (58) is composed and assembled from a set (50) of selected media components. The media components not included in the presentation (52) may be used in another part of the presentation, or may not be used at all in this version of the presentation.

The selection and assembly of components to create the presentation (58), here comprising the components (52) "E" "M" L" and "P" in the chronological or other order indicated by the arrow 56, is done by a party such as the producer, television or radio station - or possibly by the user himself. The process for selection and assembly of the presentation (58) starts before the user commences consumption of the presentation. The media content and/or components can be marked up or tagged with metadata containing such information about the media content and components, in a manner similar to the method described in WO 2004/025508.

The metadata in this case includes the identification of the "highlights", major events, and main themes of the television programme in question. Using such metadata, a human or automated editor can assemble a qualitative summary of the salient points of the presentation for a defined part or duration of the media content. Preferably, the metadata is weighted in a manner to allow the collation of e.g. the highest-weighted and most relevant results to be made. Because the narrative flow is generally linear in one direction, dramatic devices such as "flashbacks" and "flash-forwards" would require special consideration.

Activation of the "summarise" button can be interpreted locally, where the presentation client is local to the user, or else remotely where the presentation is provided by a remote server process.

Upon activation of the "summarise" function, various media components (52) are selected (54) for inclusion in the summary (60). As noted above, the selection is performed by reference to the information in the metadata associated with each media component. In Figure 2, components "B" "E" "P" and "U" have been identified by an algorithm loaded in the processor (10) for this purpose, as e.g. including salient points about the presentation comprising components "EMPL". In this case, only components "E" and "P" from the original presentation (52) has been selected for use in generating the summary. The other components "B" and "U" have been selected from the general set (50) of all other components. It would be noted that the summary (60) comprises an arrangement of the components which does not follow the same chronological order (per arrow 56) as that in the presentation. This is because the algorithm may have determined that a summary (60) assembled in that particular order would be easier to understand; alternatively one component which was useful in the presentation (e.g. "L") may be replaced by another component (e.g. "B"), perhaps because "B" is more efficient at explaining "L" than "L" itself.

In a preferred embodiment, the collation of the salient points can be enhanced by organising the same into a more coherent whole on the basis of relevance of each selected section to each other. Preferably, the summary is presented with further multimedia information augmenting and aiding user understanding of the summary e.g. by way of a voiceover to provide an explanatory commentary and to link visual scenes. Preferably, the user can select the level of qualitative detail required of the summary, and/or choose to be presented with a summary of a specified time duration.

The summary once produced can be presented to the user in a variety of ways: for example, it may be shown to the user on the same presentation device (4) as was used for the main presentation. Alternatively the summary can be presented on a separate device such as on the remote control device (6), or another dedicated device for the purpose. In one embodiment, the summary can be presented in a format or mode distinct from that of the main presentation, e.g. the summary can be presented in an audio format (voiceover summary with sound effects) for a television programme, while the main presentation continues to be shown.

In a preferred embodiment, the summary generated is modified or personalised using data about the user's profile. Thus, a summary created for one individual might be very different from another person with a different demographic profile, such as the person's age, gender, economic and marital status, etc. Information about the user can be pre-stored in the metadata of the media content or components by the organisations such as a film company or television station by reference to the profile of the expected audience for that presentation.

In another embodiment, the user can store and modify information about himself which would affect the quality and quantity of salient points selected for collation. The profile information can be input into the system by a simple on-screen process which details may be used for all presentations. The information can comprise a simple set of demographic details, but may be as detailed as is desired. In an embodiment of the invention therefore, fans of a particular soap opera register specific preferences with e.g. a specific database stored locally on the user's system, or via the Internet with the soap opera's website for this purpose. If the presentation device (4) is connected to the Internet, the user may be able to input and update his data without leaving the room to do so.

Thus, to take an example, the user may be interested in one soap opera character almost to the exclusion of the rest of the cast: by referring to the user's profile, a summary tailored to those preferences could be generated specifically for the user.

Of course, a number of user profiles can be created and stored for e.g. the members of a household. The user may also be provided with "pre-set" user profiles, and select the one which come most closely to matching his own.

In an aspect related to the personalisation of content by reference to the user's profile, the summary produced for the user may instead or additionally, be modified by reference to peer usage of this function for the particular presentation. This "peer usage" aspect is discussed further below in connection with the "level of detail" function aspect of the invention.

### "Level of detail" function

Another option is a function allowing the user to change the level of detail being presented to him. This permits the user to indicate his level of interest in the subject matter of the media content. It is expected that this function will be used to change detail levels during the presentation, but it is of course possible to provide this function even when the television programme is not being shown, i.e. to pre-configure the level of detail the user wishes to have.

In a preferred embodiment, the user is given five choices in this aspect, upon activating the personalisation button (8). They relate to the amount or level media content detail included in the presentation or part thereof:
1. More content detail
2. Less content detail
3. More of the same type content detail
4. Less of the same type content detail
5. Get to the point

The choices can be presented to the user in a variety of formats. For example, the icons could be used and displayed on the television screen or on the remote control device. Alternatively five dedicated buttons could be provided on the remote control device.

During the presentation, the user can react to the content media by activating one or more of the above functions. Along the lines of WO 2004/025508, metadata can carry information about the contents of marked up media content and components, allowing for pre-configured additions or reductions of detail to be made in response to a user request for more or less of the particular content and content type.

Referring to Figure 3 which depicts a selection and arrangement of media components in response to a request for "More detail", a modified version (62) of the presentation or part of the presentation (58) is produced, the modification relating to the level of detail included in the presentation. Upon activation, the algorithm searches the metadata associated with the media component (52), and identifies (54) "A" "B" "C" "G" "U" and "Z" as having information relevant to presentation "EMLP" (52). The components may then be arranged in an order other than in chronological or other order (as represented by arrow 56), if this helps improve the quality of the modified version of the presentation (62). As was the case with the "summarise" function discussed above, certain components (e.g. "L") may be replaced by another component (e.g. "G"), perhaps because "G" is more efficient at explaining "L" than "L" itself.

The system can also be arranged to change the detail level in a dynamic, on-the-fly manner, by reference e.g. to the user's profile. In another embodiment, a simplistic method to reduce detail is to simply cause a jump in the presentation to a later segment thereby skipping the sections which might be boring the user.

Depressing the fifth "get to the point" button causes the system to reduce the level of detail by generating a summary of e.g. the scene being shown, in a manner similar to the "summary" function aspect of the invention as discussed above.

By interacting with the presentation in this manner, the user provides feedback as to his preferences, likes and interests. This data may be in some cases seen to be a kind of audience "rating" of the presentation or part(s) thereof, which is valuable information and which can be usefully gathered and used by parties such as the presentation's producers and broadcasters.

The information generated from the user's interactions may also form all or part of an interaction with a wider "peer group" community comprising e.g. of other consumers of the presentation. This peer group can comprise a smaller sub-set of the consumers of the presentation e.g. those of the user's demographic. Preferably, the user is able to know the preferences and ratings given by members of this peer group to the presentation, by e.g. an icon for this purpose on the television screen. This information may affect the user's own choices concerning the level of detail he desires from the presentation.

Such peer group information can be communicated to the user if his presentation device is part of a network of presentation devices. Networked televisions and other presentation devices would be suitable for application of this aspect of the invention, although updates can be obtained and uploaded periodically where the presentation device is not part of a network.

Preferably, there is provided a further option to allow the user to view how his preferences and opinions compare with the peer group. This information could also be commercially useful and in certain embodiments there could be provided means for tracking and capturing this information.

The ratings provided by the user and/or "peer group" opinion may in one embodiment modify the metadata associated with the media content or component affected. Such changes can be stored locally, or remotely, where the presentation is provided by a remote server process.

The configurations as described above and in the drawing are for ease of description only and not meant to restrict the apparatus or methods to a particular arrangement or process in use. It will be apparent to the skilled person that various sequences and permutations on the methods and apparatus described are possible within the scope of this invention as disclosed.

## Claims

1. Apparatus for dynamically generating a personalised version of a presentation for a user, the presentation comprising a first assembled selection of more than one of a plurality of media components, each of the plurality of media components being associated with metadata specific to it,
the apparatus including
- selection means for selection of at least one of the plurality of media components, wherein the selection is performed in dependence on the metadata associated with the selected media component or components,
- assembly means for assembly of the selection of the at least one of the plurality of media components, where more than one of the plurality of media components is selected, and
- user interface means for activating the selection means and assembly means,
wherein in use the user can activate the selection means and assembly means using the user interface means after commencement of the presentation, to dynamically generate the personalised version of the presentation comprising a second assembled selection of at least one of the plurality of media components.

2. Apparatus according to claim 1 wherein the personalised version of the presentation is a summary of the presentation.

3. Apparatus according to claim 1 or claim 2 wherein the metadata describes a highlight, event or theme of the presentation.

4. Apparatus according to any preceding claim wherein the metadata describes a chronological or other location of the media component or components within the presentation.

5. Apparatus according to any preceding claim wherein the metadata associated with each media component or component is weighted against each other.

6. Apparatus according to any one of claims 2 to 5 wherein the user interface means comprises a control device including at least one button for generating a summary.

7. Apparatus according to any one of claims 2 to 7 further including means to augment the summary with information linking the media components selected for the generation of the summary.

8. Apparatus according to any preceding claim further including means to present the presentation, and means to present the summary, to the user.

9. Apparatus according to claim 8 wherein the means to present the presentation, is the same as the means to present the summary.

10. Apparatus according to any one of claims 2 to 9 wherein the presentation is presented in a media format different from the presentation of the summary.

11. Apparatus according to any preceding claim wherein the selection means and the assembly means select and assemble the at least one of the plurality of media components in dependence on a profile of the user.

12. Apparatus according to any preceding claim wherein the selection means and the assembly means select and assemble the at least one of the plurality of media components in dependence on a profile of members of a peer group of the user.

13. Apparatus according to claim 1 wherein the personalised version of the presentation is a modified version of the presentation including modifications to a detail level.

14. Apparatus according to claim 13 wherein modifications to the detail level are pre-configured.

15. Apparatus according to any one of claims 13 to 14 wherein the user interface means comprises a control device including at least one button for dynamically generating a modified version of the presentation with at least one of the following modifications: (i) more content detail; (ii) less content detail; (iii) more of the same content detail; (iv) less of the same content detail; (v) "get to the point".

16. Apparatus according to any one of claims 13 to 15 further including means to collate information about the modifications to the detail level.

17. Apparatus according to any one of claims 13 to 16 further including means to communicate to the user, the modifications to the detail level by a peer group of the user.

18. Apparatus according to any one of claims 13 to 17 comprising a networked system.

19. Apparatus according to any one of claims 13 to 18 wherein the modifications to the detail level are stored as metadata and associated with one or more of the plurality of media components and/or the presentation.

20. A method for dynamically generating a personalised version of a presentation for a user, the presentation comprising a first assembled selection of more than one of a plurality of media components, each of the plurality of media components being associated with metadata specific to it,
the method including the steps of
- selection of at least one of the plurality of media components, wherein the selection is performed in dependence on the metadata associated with the selected media component or components,
- assembly of the selection of the at least one of the plurality of media components, where more than one of the plurality of media components is selected, and
- activation of the selection means and assembly means after commencement of the presentation, to dynamically generate the personalised version of the presentation comprising a second assembled selection of at least one of the plurality of media components.

21. A method according to claim 20 wherein either or both of the selection step or the assembly step are performed automatically.

22. A method according to claim 20 or claim 21 wherein the presentation has a linear narrative and has progressed to a point along the linear narrative, and wherein the selection and assembly steps are activated to dynamically generate a summary of a part of the presentation prior to the point along the linear narrative.

23. A method according to any one of claims 20 to 22 wherein the presentation has a linear narrative and has progressed to a point along the linear narrative, and
wherein the selection and assembly steps are activated to dynamically generate a summary of a part of the presentation after the point along the linear narrative.
